# EUROPÄISCHE PATENTANMELDUNG

(11) **EP 2 918 871 A1**
(43) Veröffentlichungstag der Anmeldung: **16.09.2015**
(21) Anmeldenummer: 14198416.1
(22) Anmeldetag: 17.12.2014
(51) Int. Cl.: F16H 3/66, F16H 37/04

(54) **Getriebeeinheit für ein Gruppengetriebe**

(30) Priorität: 30.01.2014 DE 102014201646
(71) Anmelder: ZF Friedrichshafen AG, 88046 Friedrichshafen (DE)
(72) Erfinder: Himmelsbach, Raphael, 88045 Friedrichshafen (DE); Wechs, Michael, 88131 Lindau (DE); Grad, Karl, 94161 Ruderting (DE); Beck, Stefan, 88097 Eriskirch (DE); Rattay, Martin, 88213 Ravensburg (DE)

(57) **Zusammenfassung**

Getriebeeinheit (1, 9, 12, 14, 18, 20) für ein Gruppengetriebe, umfassend eine Planetenstufe (2), über welche eine Eingangswelle (EW, EW', EW") und eine Ausgangswelle (AW, AW', AW") unter Darstellung unterschiedlicher Übersetzungsverhältnisse miteinander koppelbar sind, wobei die Planetenstufe (2) als Komponenten mindestens ein Sonnenrad (SO1, S02), mindestens ein Hohlrad (H01, H02, HO1, H02), sowie an einem Planetensteg (PS) rotierbar gelagerte Planetenräder (PR) umfasst, dadurch gekennzeichnet, dass die Planetenräder (PR) einen Bereich mit wenigstens zwei unterschiedlichen, in Bezug auf eine Rotationsachse der Planetenstufe axial versetzt angeordneten, Verzahnungen (3, 4) aufweisen, wobei über die erste Verzahnung (3) ein Zahneingriff mit einem ersten Sonnenrad (SO1) und/oder mit einem ersten Hohlrad (HO1) hergestellt ist, wohingegen die Planetenräder (PR) an der zweiten Verzahnung (4) mit einem zweiten Sonnenrad (S02) und/oder einem zweiten Hohlrad (H02) kämmen, und dass von den Komponenten der Planetenstufe (2) eine Komponente drehfest mit der Eingangswelle (EW, EW', EW") verbunden und eine Komponente an einem Gehäuse (8) festgesetzt ist, während die verbleibenden Komponenten jeweils mit der Ausgangswelle (AW, AW', AW") koppelbar sind.

## Beschreibung

Die Erfindung betrifft eine Getriebeeinheit für ein Gruppengetriebe, umfassend eine Planetenstufe, über welche eine Eingangswelle und eine Ausgangswelle unter Darstellung unterschiedlicher Übersetzungsverhältnisse miteinander koppelbar sind, wobei die Planetenstufe als Komponenten mindestens ein Sonnenrad, mindestens ein Hohlrad, sowie einen mindestens ein Planetenrad führenden Planetensteg umfasst.

Gruppengetriebe kommen unter anderem bei landwirtschaftlichen und kommunalen Nutzfahrzeugen zum Einsatz, um große Ganganzahlen mit vertretbarem Aufwand realisieren zu können. So hat das sehr breite Aufgabenfeld eines landwirtschaftlichen oder kommunalen Nutzfahrzeuges, wie beispielsweise das Ausführen von Feldarbeiten und Transporttätigkeiten, sehr unterschiedliche Fahrbereiche zur Folge, was eine dementsprechend große Spreizung zwischen einem langsamsten und einem schnellsten Gang voraussetzt. Ferner sind bei Getrieben von derartigen Nutzfahrzeugen üblicherweise kleine geometrische Stufensprünge zwischen den einzelnen Gängen gefordert, was in Kombination mit der großen Spreizung in der großen Ganganzahl resultiert.

Klassischerweise setzt sich ein Gruppengetriebe eines landwirtschaftlichen oder kommunalen Nutzfahrzeuges dabei aus einer Stufen- oder Hauptgruppe, einer vor- oder nachgeschalteten Splitgruppe, einer üblicherweise nachgeschalteten Bereichsgruppe und häufig auch noch aus einer Wendegruppe, sowie einer Kriechganggruppe zusammen. Über die Hauptgruppe wird hierbei eine Gangfolge des Getriebes vorgegeben, welche durch die vor- und nachgeschalteten, weiteren Getriebegruppen und deren jeweilige Stufen entsprechend beeinflusst wird. So wird die Gangfolge der Hauptgruppe mittels einer vor- oder nachgeschalteten Splitgruppe verdichtet, indem die Gangstufen der Hauptgruppe durch kleine Stufensprünge der Splitgruppe aufgeteilt werden und in der Folge die Ganganzahl somit mit der Anzahl darstellbarer Stufen der Splitgruppe multipliziert wird. Hingegen bewirkt eine nachgeschaltete Bereichsgruppe mittels großer Übersetzungssprünge eine Übersetzung der Gangstufen der Hauptgruppe in unterschiedliche Fahrbereiche. Mittels einer ebenfalls zumeist vorgesehenen Wendegruppe kann eine Drehrichtungsumkehr realisiert werden, welche in Kombination mit den anderen Getriebegruppen zumeist auch die Darstellung mehrerer Rückwärtsgänge möglich macht. Schließlich wird eine Kriechganggruppe zu dem Zweck vorgesehen, durch eine starke Untersetzung ein Langsamfahren des jeweiligen Nutzfahrzeuges darstellen zu können, beispielsweise für einen Einsatz in unwegsamem Gelände oder bei Arbeitseinsätzen, welche eine extreme Langsamfahrt des Nutzfahrzeuges voraussetzen.

Aus der US 2008/0245167 A1 geht eine Getriebeeinheit für ein Gruppengetriebe hervor, welche sich aus einer Planetenstufe zusammensetzt und innerhalb des Gruppengetriebes eine einer Hauptgruppe des Gruppengetriebes nachgeschaltete Bereichsgruppe bildet. Über die Planetenstufe können dabei eine Eingangswelle der Bereichsgruppe und eine Ausgangswelle unter Darstellung unterschiedlicher Übersetzungsverhältnisse miteinander gekoppelt werden, wobei sich die Planetenstufe aus den Komponenten Sonnenrad, Hohlrad und einem mehrere Planetenräder führenden Planetensteg zusammensetzt. Von den Komponenten ist dann das Sonnenrad auf der Eingangswelle angeordnet und der Planetensteg drehfest mit der Ausgangswelle gekoppelt, während das Hohlrad zur Darstellung der unterschiedlichen Übersetzungsverhältnisse zum einen an einem Gehäuse festgesetzt und zum anderen ebenfalls drehfest mit der Ausgangswelle gekoppelt werden kann.

Ausgehend vom vorstehend beschriebenen Stand der Technik ist es nun die Aufgabe der vorliegenden Erfindung, eine Getriebeeinheit für ein Gruppengetriebe zu schaffen, bei welcher unterschiedliche Übersetzungsverhältnisse auf möglichst kompakte Art und Weise dargestellt werden können.

Diese Aufgabe wird ausgehend vom Oberbegriff des Anspruchs 1 in Verbindung mit dessen kennzeichnenden Merkmalen gelöst. Die hierauf folgenden, abhängigen Ansprüche geben jeweils vorteilhafte Weiterbildungen der Erfindung wieder.

Gemäß der Erfindung umfasst eine Getriebeeinheit für ein Gruppengetriebe eine Planetenstufe, über welche eine Eingangswelle und eine Ausgangswelle unter Darstellung unterschiedlicher Übersetzungsverhältnisse miteinander gekoppelt werden können. Die Planetenstufe umfasst dabei als Komponenten mindestens ein Sonnenrad, mindestens ein Hohlrad, sowie an einem Planetensteg rotierbar gelagerte Planetenräder.

Im Sinne der Erfindung kann die erfindungsgemäße Getriebeeinheit dabei, je nach Definition der unterschiedlichen Übersetzungsverhältnisse, eine Splitgruppe, eine Bereichsgruppe oder eine Wendegruppe eines Gruppengetriebes bilden und ist je nach Ausgestaltung innerhalb eines Gruppengetriebes einer Hauptgruppe vor- oder nachgeschaltet. Besonders bevorzugt werden Übersetzungsverhältnisse der Getriebeeinheit aber so definiert, dass die Getriebeeinheit eine klassische Wendegruppe und eine Bereichs- oder Splitgruppe in einem Modul auf kompakte Art und Weise vereinigt. In diesem Fall wird also zumindest bei Schaltung eines der Übersetzungsverhältnisse eine Drehrichtungsumkehr vollzogen, während mindestens ein verbleibendes Übersetzungsverhältnis eine für eine Splitgruppe oder eine Bereichsgruppe geeignete Übersetzung bildet.

Erfindungsgemäß verlaufen die Eingangswelle und die Ausgangswelle bevorzugt koaxial zueinander, wobei aber alternativ dazu auch eine achsparallele oder winkelige Anordnung der beiden Wellen denkbar ist. Insbesondere verlaufen die Ein- und die Ausgangswelle im letztgenannten Fall dabei im Wesentlichen orthogonal zueinander, so dass ein für ein Front-Quer-Konzept geeigneter Aufbau der Getriebeeinheit realisiert wird.

Die Planetenstufe zeichnet sich weiter dadurch aus, dass sie an dem Planetensteg rotierbar gelagerte Planetenräder umfasst und diese Planetenräder einen Bereich mit wenigstens zwei unterschiedlichen, in Bezug auf eine Rotationsachse der Planetenstufe axial versetzt angeordneten, Verzahnungen aufweisen. Alternativ dazu ist auch eine Anordnung denkbar, bei der die Planetenräder anstatt wie oben beschrieben einstückig, in Form von jeweils wenigstens zwei verschiedenen, axial versetzt angeordneten Planetenrädern mit unterschiedlichen Verzahnungen ausgeführt sind.

Die Planetenstufe umfasst axial versetzt zwei Sonnenräder, wobei das erste Sonnenrad du das zweite Sonnenrad jeweils eine unterschiedliche Verzahnung aufweisen. Über die erste Verzahnung der Planetenräder ist ein Zahneingriff mit dem ersten Sonnenrad und/oder einem ersten Hohlrad hergestellt. Die Planetenräder kämmen an der zweiten Verzahnung mit dem zweiten Sonnenrad und/oder einem zweiten Hohlrad.

Durch die Formulierung "und/oder" bezüglich des Zahneingriffs der Planetenräder mit den Sonnenrädern bzw. Hohlrädern soll zum Ausdruck gebracht werden, dass unterschiedliche Anordnungen der Planetenstufe denkbar sind. Bevorzugt befindet sich jedes der Sonnenräder mit einer Verzahnung der Planetenräder in Eingriff, während jeweils nur eine Verzahnung der Planetenräder mit einem Hohlrad kämmt. Weiter kann die Planetenstufe ein Sonnenrad, sowie ein erstes und ein zweites Hohlrad aufweisen. Es sind darüber hinaus erfindungsgemäß auch Anordnungen der Planetenstufe denkbar, bei denen zwei verschiedene Sonnenräder mit den jeweiligen Verzahnungen der Planetenräder kämmen und jede der Verzahnungen der Planetenräder mit der Verzahnung eines entsprechenden Hohlrads kämmt. Hier ist es erforderlich, dass die Lastpfade zur weiteren Anbindung der Hohlräder selektiv unterbrechbar sind. Dies bedeutet, dass selektiv der Lastpfad zur Anbindung des ersten Hohlrads geöffnet ist, während der Lastpfad zur Anbindung des zweiten Hohlrads geschlossen ist. Analog dazu ist ein weiterer, umgekehrter Zustand möglich, in dem der Lastpfad zur Anbindung des ersten Hohlrads geschlossen und der Lastpfad zur Anbindung des zweiten Hohlrads geöffnet ist. Hierdurch wird sichergestellt, dass die Planetenstufe nicht aufgrund von Verspannungen durch konträr wirkende Lastpfade blockiert. Dies wäre bei gleichzeitig geschlossenen Lastpfaden gegeben. In der Folge wird die Anzahl an darstellbaren Übersetzungsverhältnissen um 1 erhöht. Dem steht ein Zustand entgegen, bei dem beide Lastpfade geöffnet sind, wodurch eine Lastunterbrechung stattfindet. Die selektive Unterbrechbarkeit kann beispielsweise durch form- oder reibschlüssige Schaltelemente realisiert werden.

Zudem ist von den Komponenten der Planetenstufe eine Komponente mit der Eingangswelle verbunden und eine Komponente an einem Gehäuse festgesetzt, während die verbleibenden Komponenten jeweils mit der Ausgangswelle koppelbar sind.

Von den Komponenten der Planetenstufe ist dabei eine Komponente drehfest mit der Eingangswelle verbunden, während eine andere Komponente an einem Gehäuse stillgesetzt ist und daher in ihrer Drehbewegung permanent gehindert wird. Die noch verbleibenden Komponenten der Planetenstufe können dann jeweils im Einzelnen drehfest mit der Ausgangswelle der Getriebeeinheit gekoppelt werden.

Eine derartige Ausgestaltung einer Getriebeeinheit hat dabei den Vorteil, dass mehrere unterschiedliche Übersetzungsverhältnisse auf kompakte Art und Weise realisiert werden können, wobei hierbei bei entsprechender Anbindung der einzelnen Komponenten der Planetenstufe, sowie entsprechender Wahl von Standübersetzungen zudem problemlos unterschiedliche Drehrichtungen der Ausgangswelle darstellbar sind, so dass die erfindungsgemäße Getriebeeinheit eine klassische Wendegruppe und eine Split- oder Bereichsgruppe vereinigen kann. Denn aufgrund der Ausführung des mindestens einen Planetenrades als Stufenplanet können mehrere Zahneingriffe mit weiteren Komponenten der Planetenstufe auf kompaktem Bauraum hergestellt werden. Da dann zudem eine der Komponenten mit der Eingangswelle verbunden und eine Komponente an einem Gehäuse festgesetzt ist, während die übrigen Komponenten im Einzelnen drehfest mit der Ausgangswelle gekoppelt werden können, ist auf diesem kompakten Bauraum die Definition mehrerer unterschiedlicher Übersetzungsverhältnisse möglich. Durch die Verwendung einer Planetenstufe können darüber hinaus vorteilhaft auch sehr kleine Stufensprünge zwischen zwei Gangstufen, beispielsweise Vorwärtsgangstufen, realisiert werden. Idealerweise sind die Stufensprünge derart ungleichmäßig über die Gesamtgetriebespreizung verteilt, dass in einem Hauptarbeitsbereich (sehr hohe bis maximale Zugkraftanforderung) eine möglichst feine Getriebeabstufung vorliegt. Hierdurch wird in dem Hauptarbeitsbereich ein Zugkraftangebot nahe des idealen Arbeitspunktes des Antriebsstrangs erreicht. Außerhalb des Hauptarbeitsbereichs, beispielsweise bei Transportfahrten mit möglichst hoher Geschwindigkeit, ist eine derart feine Abstufung üblicherweise nicht zwingend erforderlich.

Hingegen sind die Planetenräder im Falle der Getriebeeinheit der US 2008/0245167 A1 jeweils mit nur einer Verzahnung ausgestattet, über welche sie jeweils sowohl mit dem radial innenliegenden Sonnenrad, als auch mit dem radial umliegenden Hohlrad im Zahneingriff stehen. Zwar können auch dabei unterschiedliche Übersetzungsverhältnisse zwischen der Eingangswelle und der Ausgangswelle definiert werden, die Anzahl dieser Übersetzungsverhältnisse ist dabei aber auf zwei Übersetzungsverhältnisse begrenzt, von welchen eines einen starren Durchtrieb durch Verblocken der Planetenstufe darstellt.

Erfindungsgemäß ist die Planetenstufe bevorzugt als Minusplanetenstufe realisiert, d. h. der Planetensteg trägt mindestens ein Planetenrad, welches an seiner ersten und an seiner zweiten Verzahnung jeweils mit den radial benachbart liegenden Komponenten kämmt, also, sofern vorhanden, mit dem ersten bzw. dem zweiten Sonnenrad und dem ersten bzw. dem zweiten Hohlrad im Zahneingriff steht. Alternativ dazu kann die Planetenstufe aber auch als Plusplanetenstufe ausgeführt sein, bei welcher der Planetenträger mindestens ein Planetenradpaar trägt, wobei beide Planetenräder dabei dann bevorzugt mit je zwei Verzahnungen ausgeführt sind, also jeweils als Stufenplaneten vorliegen. Ein Planetenrad eines Planetenradpaares kämmt dann mit dem oder den vorhandenen Sonnenrädern, während das jeweils andere Planetenrad mit dem oder den vorhandenen Hohlrädern im Zahneingriff steht. Zudem kämmen die Planetenräder eines Planetenradpaares untereinander.

Bei der erfindungsgemäßen Getriebeeinheit ist dabei eine durch Zusammenspiel der ersten Verzahnung der Planetenräder mit dem ersten Sonnenrad und/oder dem ersten Hohlrad definierte, erste Standübersetzung kleiner oder größer als eine durch Zusammenspiel der zweiten Verzahnung der Planetenräder mit dem zweiten Sonnenrad und/oder dem zweiten Hohlrad definierte, zweite Standübersetzung. Hierdurch können Stufensprünge zwischen den einzelnen darstellbaren Übersetzungsverhältnissen definiert werden, wobei ferner beeinflussbar ist, ob sich beim Schalten des einzelnen Übersetzungsverhältnisses gleiche Drehrichtungen an Ein- und Ausgangswelle oder gegensätzliche Drehbewegungen einstellen. Entsprechend einer Ausführungsform der Erfindung sind die Eingangswelle und die Ausgangswelle zudem drehfest miteinander verbindbar. Die Ein- und die Ausgangswelle können also unmittelbar drehfest miteinander gekoppelt werden, wodurch ein direkter Durchtrieb realisiert wird.

Bezüglich der verschiedenen Anbindungsmöglichkeiten der Komponenten der Planetenstufe ist der Planetensteg bei einer ersten Ausgestaltungsmöglichkeit der Erfindung am Gehäuse festgesetzt, sowie das erste Sonnenrad mit der Eingangswelle drehfest verbunden, während die verbleibenden Komponenten jeweils mit der Ausgangswelle gekoppelt werden können. Vorteilhafterweise können hierbei, je nach weiteren Komponenten der Planetenstufe, ein oder auch mehrere Rückwärtsgänge definiert werden, wobei im Falle einer größeren, ersten Standübersetzung dabei auch eine Drehrichtungsumkehr der Ausgangswelle mit einer Übersetzung im Bereich -1 realisierbar ist. Je nach Abstimmung der Standübersetzungen aufeinander kann zudem ein Vorwärtsgang mit Übersetzung ins Schnelle oder ins Langsame auf die Ausgangswelle definiert werden.

Alternativ zu der vorgenannten Ausgestaltung ist in einer zweiten Ausführungsmöglichkeit der Planetenstufe das erste Sonnenrad am Gehäuse festgesetzt und der Planetensteg drehfest mit der Eingangswelle gekoppelt, wohingegen die verbleibenden Komponenten jeweils mit der Ausgangswelle drehfest verbindbar sind. Je nach Abstimmung der Standübersetzungen der Planetenstufe aufeinander können hierbei ein oder mehrere ins Schnelle übersetzende Vorwärtsgänge, sowie ein Rückwärtsgang oder auch mehrere Vorwärtsgänge definiert werden, von welchen einer oder mehrere ins Schnelle, sowie einer ins Langsame auf die Ausgangswelle übersetzt.

Entsprechend einer weiteren, alternativen Ausgestaltungsmöglichkeit der Erfindung ist das zweite Sonnenrad am Gehäuse festgesetzt und der Planetensteg mit der Eingangswelle drehfest verbunden, während die verbleibenden Komponenten jeweils mit der Ausgangswelle gekoppelt werden können. Auch hierbei können wiederum unterschiedliche Übersetzungsverhältnisse definiert werden, welche je nach Abstimmung der Standübersetzungen der Planetenstufe aufeinander mehrere Vorwärtsgänge mit Unter- oder Übersetzung, sowie ggf. auch einen Rückwärtsgang umfassen.

Weiter alternativ ist das erste Hohlrad am Gehäuse festgesetzt und der Planetensteg mit der Eingangswelle drehfest verbunden, während die verbleibenden Komponenten jeweils mit der Ausgangswelle drehfest verbindbar sind. Im Rahmen einer weiteren, alternativen Ausführungsform ist das zweite Hohlrad am Gehäuse festgesetzt und der Planetensteg drehfest mit der Ausgangswelle gekoppelt, wohingegen die verbleibenden Komponenten jeweils mit der Ausgangswelle drehfest verbunden werden können. In beiden Fällen können bei entsprechender Abstimmung der Standübersetzungen der Planetenstufe aufeinander unterschiedliche Vorwärtsgänge mit Übersetzungen einer jeweiligen Drehbewegung ins Schnelle auf die Ausgangswelle, sowie entweder ein Rückwärtsgang oder ein Vorwärtsgang unter einer Übersetzung ins Langsame gebildet werden.

In Weiterbildung der Erfindung kann eine Koppelung der verbleibenden Komponenten der Planetenstufe und/oder eine drehfeste Verbindung von An- und Ausgangswelle jeweils über Lastschaltelemente hergestellt werden. Dabei handelt es sich bei diesen Lastschaltelementen bevorzugt um kraftschlüssige Schaltelemente in Form von Lamellenkupplungen, wobei aber auch anderweitige Ausführungen denkbar sind. Zudem können Schaltelemente auch prinzipiell als formschlüssige Schaltelemente, wie Klauenkupplungen oder Sperrsynchronisationen, verwirklicht sein, wobei dann allerdings ein Wechsel zwischen den Übersetzungsverhältnissen nicht unter Last vollzogen werden kann.

Die Erfindung ist nicht auf die angegebene Kombination der Merkmale des Hauptanspruchs oder der hiervon abhängigen Ansprüche beschränkt. Es ergeben sich darüber hinaus Möglichkeiten, einzelne Merkmale, auch soweit sie aus den Ansprüchen, der nachfolgenden Beschreibung bevorzugter Ausführungsformen oder unmittelbar aus den Zeichnungen hervorgehen, miteinander zu kombinieren. Die Bezugnahme der Ansprüche auf die Zeichnungen durch Verwendung von Bezugszeichen soll den Schutzumfang der Ansprüche nicht beschränken.

Vorteilhafte Ausgestaltungen der Erfindung, die nachfolgend erläutert werden, sind in den Zeichnungen dargestellt. Es zeigt:
- Fig. 1: eine schematische Ansicht einer Getriebeeinheit gemäß einer ersten Ausführungsform der Erfindung;
- Fig. 2: eine schematische Darstellung einer Getriebeeinheit entsprechend einer zweiten Ausgestaltungsmöglichkeit der Erfindung;
- Fig. 3: eine schematische Ansicht einer Getriebeeinheit entsprechend einer dritten Ausführungsform der Erfindung;
- Fig. 4: eine schematische Darstellung einer Getriebeeinheit gemäß einer vierten Ausgestaltungsmöglichkeit der Erfindung;
- Fig. 5: eine schematische Ansicht einer Getriebeeinheit gemäß einer fünften Ausführungsform der Erfindung;
- Fig. 6: eine schematische Darstellung einer Getriebeeinheit gemäß einer sechsten Ausgestaltungsmöglichkeit der Erfindung.

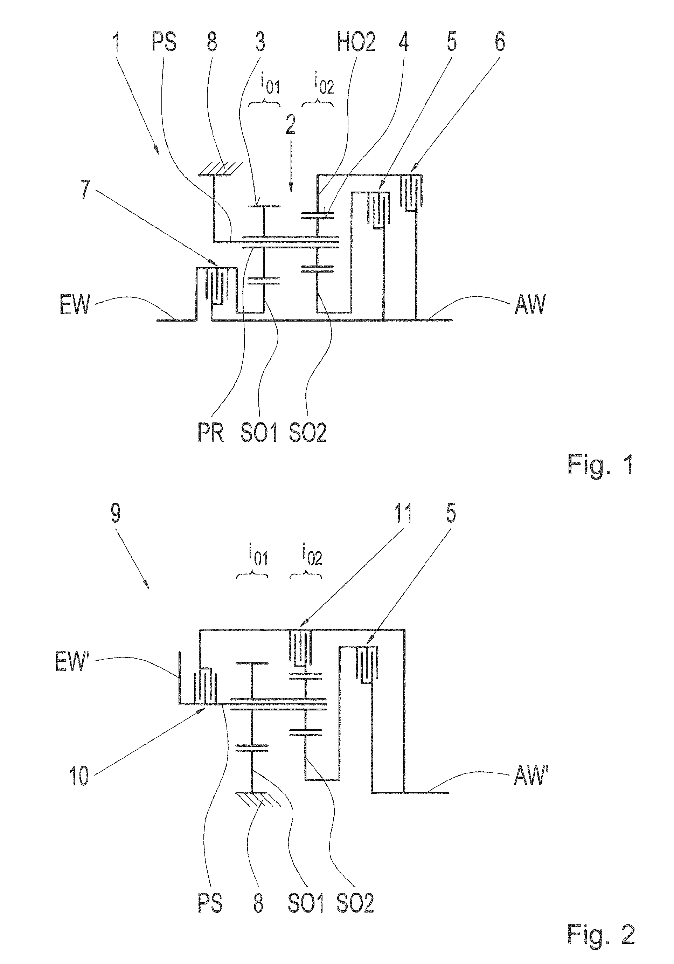

Aus Fig. 1 geht eine schematische Ansicht einer Getriebeeinheit 1 entsprechend einer ersten Ausführungsform der Erfindung hervor, wobei diese Getriebeeinheit 1 im verbauten Zustand dann bevorzugt den Teil eines Gruppengetriebes eines landwirtschaftlichen oder kommunalen Nutzfahrzeuges, wie beispielsweise einem Traktor, bildet.

Wie in Fig. 1 zu erkennen ist, umfasst die Getriebeeinheit 1 eine Planetenstufe 2, welche sich aus einem ersten Sonnenrad S01, einem zweiten Sonnenrad S02, einem Hohlrad H02 und einem Planetensteg PS zusammensetzt. Der Planetensteg PS führt dabei mehrere Planetenräder PR, von welchen vorliegend allerdings nur eines zeichnerisch dargestellt ist. Die Planetenräder PR sind jeweils drehbar auf dem Planetensteg PS gelagert und verfügen über je zwei axial nebeneinander ausgestaltete Verzahnungen 3 und 4. Dabei kämmt jedes der Planetenräder PR an seiner ersten Verzahnung 3 mit dem radial innenliegenden, ersten Sonnenrad SO1, wohingegen über die zweite Verzahnung 4 Zahneingriffe sowohl mit dem radial innenliegenden, zweiten Sonnenrad S02, als auch dem radial umliegenden Hohlrad H02 hergestellt sind. Insofern sind die Planetenräder PR als Stufenplaneten ausgeführt, wobei ein Zahneingriff mit dem ersten Sonnenrad S01 axial benachbart zu den in einer Ebene stattfindenden Zahneingriffen mit dem zweiten Sonnenrad S02 und dem Hohlrad H02 liegt.

Mittels der Planetenstufe 2 können eine Eingangswelle EW und eine Ausgangswelle AW unter Darstellung unterschiedlicher Übersetzungsverhältnisse miteinander gekoppelt werden. Dabei ist die Eingangswelle EW drehfest mit dem ersten Sonnenrad S01 verbunden, während die zu der Eingangswelle EW koaxial verlaufende Ausgangswelle AW zum einen über ein erstes Lastschaltelement 5 mit dem zweiten Sonnenrad S02 und zum anderen über ein zweites Lastschaltelement 6 mit dem Hohlrad H02 gekoppelt werden kann. Zudem kann die Ausgangswelle AW auch direkt durch Betätigung eines zwischenliegenden, dritten Lastschaltelements 7 drehfest mit der Eingangswelle EW verbunden werden, um einen starren Durchtrieb von der Eingangswelle EW auf die Ausgangswelle AW zu realisieren. Schließlich ist der Planetensteg PS an einem umliegenden Gehäuse 8 permanent festgesetzt, so dass dessen Drehbewegung unterbunden ist und die Planetenstufe 2 in der Folge als Standgetriebe fungiert.

Je nach Definition von Standübersetzungen i₀₁ und i₀₂ über die Verzahnung 3 im Zusammenspiel mit dem ersten Sonnenrad S01, sowie über die Verzahnung 4 im Zusammenspiel mit dem zweiten Sonnenrad S02 und dem Hohlrad H02 werden bei jeweiliger Betätigung der Lastschaltelemente 5 und 6 unterschiedliche Übersetzungsverhältnisse gebildet: Ist die Standübersetzung i₀₁ größer als die Standübersetzung i₀₂, so wird bei Betätigung des Lastschaltelementes 6 und damit einer drehfesten Koppelung des Hohlrades H02 mit der Ausgangswelle AW ein Rückwärtsgang definiert, wohingegen im Falle der Ansteuerung des Lastschaltelements 5 eine Drehbewegung der Eingangswelle EW ins Schnelle auf die Ausgangswelle AW übersetzt wird. In Kombination mit dem direkten Durchtrieb können dabei also zwei Vorwärtsgänge, sowie ein Rückwärtsgang gebildet werden, wobei bei dem zuletzt genannten die Eingangswelle EW und die Ausgangswelle AW gegensätzlich zueinander rotieren.

Wird hingegen die Standübersetzung i₀₁ kleiner ausgeführt als die Standübersetzung i₀₂, so wird bei Betätigung des Lastschaltelements 5 eine Drehbewegung ins Langsame auf die Ausgangswelle AW übersetzt, während eine Betätigung des Lastschaltelements 6 erneut eine Drehrichtungsumkehr der Ausgangswelle AW und damit die Definition eines Rückwärtsganges zur Folge hat. Somit werden wiederum in Kombination mit der direkten Durchschaltbarkeit über das Lastschaltelement 7 zwei Vorwärtsgänge, sowie ein Rückwärtsgang gebildet.

Wie in Fig. 1 zu erkennen ist, handelt es sich bei den Lastschaltelementen 5 bis 7 jeweils um Lamellenkupplungen, die jeweils unter Last geschaltet werden können, so dass ein Wechsel zwischen den einzelnen Übersetzungsverhältnissen und dabei auch zwischen Vorwärts- und Rückwärtsfahrt ohne Unterbrechung des Kraftflusses realisiert werden kann.

Die in Fig. 1 schematisch dargestellte Getriebeeinheit 1 kann für beide möglichen Verhältnisse der Standübersetzungen i₀₁ und i₀₂ eine Wendegruppe und eine Split- oder Bereichsgruppe vereinigen, wobei zweiteres durch die konkrete Gestaltung der Übersetzungsverhältnisse der Vorwärtsgänge entschieden wird. Innerhalb eines Gruppengetriebes kann die Getriebeeinheit dann einer Hauptgruppe vor- oder nachgeschaltet sein.

Aus Fig. 2 geht eine schematische Darstellung einer Getriebeeinheit 9 entsprechend einer zweiten Ausgestaltungsmöglichkeit der Erfindung hervor. Im Unterschied zu der Variante nach Fig. 1 ist in diesem Fall das erste Sonnenrad S01 am umliegenden Gehäuse 8 permanent festgesetzt, während der Planetensteg PS mit einer Eingangswelle EW' in Verbindung steht, die dabei orthogonal zu einer Ausgangswelle AW' verläuft. Erneut kann dabei über ein Lastschaltelement 10 eine direkte drehfeste Koppelung der Eingangswelle EW' mit der Ausgangswelle AW' vorgenommen werden. Schließlich kann das Hohlrad H02 wiederum über ein Lastschaltelement 11 drehfest mit der Ausgangswelle AW' verbunden werden, während das zweite Sonnenrad S02 in Übereinstimmung mit der Variante nach Fig. 1 über das Lastschaltelement 5 mit der Ausgangswelle AW' koppelbar ist.

Entsprechend einer Abstimmung der Standübersetzungen i₀₁ und i₀₂ aufeinander können auch im Falle der Ausgestaltung nach Fig. 2 unterschiedliche Übersetzungsverhältnisse definiert werden. Wird die Standübersetzung i₀₁ größer gewählt als die Standübersetzung i₀₂, so wird bei Betätigung des Lastschaltelements 5 ein Rückwärtsgang, sowie im Falle der Ansteuerung des Lastschaltelements 11 ein Vorwärtsgang mit Übersetzung einer Drehbewegung ins Schnelle auf die Ausgangswelle AW' geschaltet. Gemeinsam mit der unmittelbaren drehfesten Koppelung von Eingangswelle EW' und Ausgangswelle AW' mit Hilfe des Lastschaltelements 10 können somit zwei Vorwärtsgänge, sowie ein Rückwärtsgang definiert und damit bei geeigneter Abstimmung der Gänge eine Wendegruppe und eine Split- oder Bereichsgruppe in der Getriebeeinheit 9 vereinigt werden.

Wird hingegen die Standübersetzung i₀₂ größer gewählt als die Standübersetzung i₀₁, so führen sowohl eine Betätigung des Lastschaltelements 5 als auch des Lastschaltelements 11 jeweils zu der Ausgestaltung je eines Vorwärtsganges, wobei im Falle der Koppelung des zweiten Sonnenrades S02 mit der Ausgangswelle AW' eine Drehbewegung ins Langsame auf die Ausgangswelle AW' übersetzt wird, während im Falle der Ansteuerung des Lastschaltelements 11 wiederum eine Übersetzung ins Schnelle vorliegt. In der Folge kann die Getriebeeinheit 9 in diesem Fall als Split- oder Bereichsgruppe in einem Gruppengetriebe vorgesehen werden.

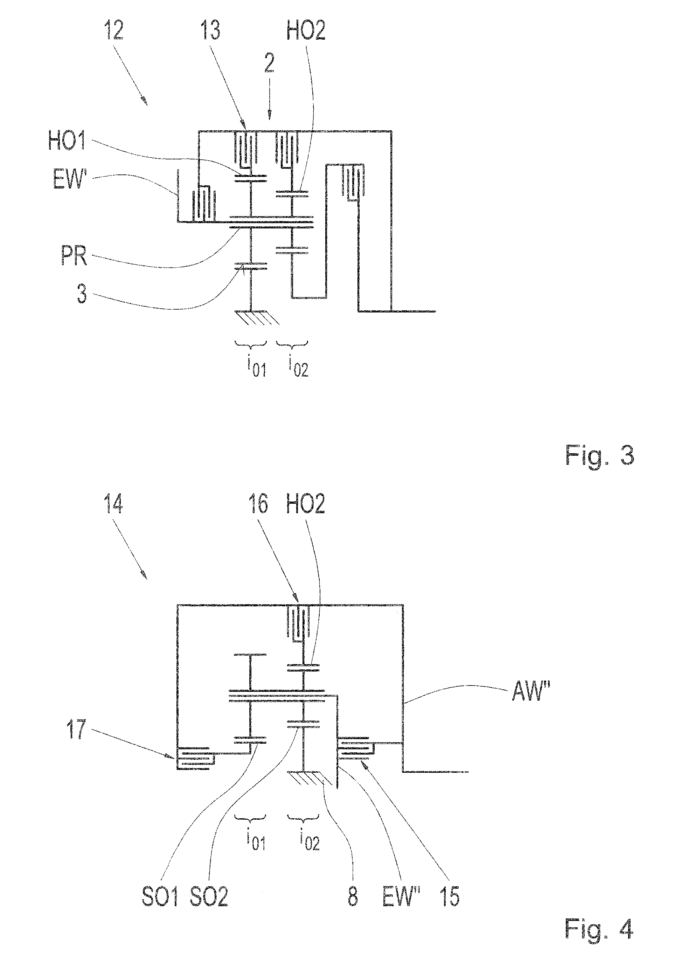

Des Weiteren geht aus Fig. 3 eine schematische Darstellung einer Getriebeeinheit 12 entsprechend einer dritten Ausführungsform der Erfindung hervor, wobei diese Ausführung nach Fig. 3 dabei weitestgehend der Variante nach Fig. 2 entspricht. Einziger Unterschied ist, dass neben dem Hohlrad H02 noch ein erstes Hohlrad H01 vorgesehen ist, welches an der Verzahnung 3 mit den Planetenrädern PR im Zahneingriff steht und zudem mittels eines Lastschaltelements 13 mit der Ausgangswelle AW' gekoppelt werden kann. In der Folge wird durch diese zusätzliche Komponente der Planetenstufe 2 ein zusätzliches, darstellbares Übersetzungsverhältnis geschaffen, wobei dieses für beide möglichen Verhältnisse der Standübersetzungen i₀₁ und i₀₂ zueinander jeweils einen Vorwärtsgang mit einer Übersetzung einer Drehbewegung ins Schnelle auf die Ausgangswelle AW' definiert.

Fig. 4 zeigt eine schematische Ansicht einer Getriebeeinheit 14 gemäß einer vierten Ausgestaltungsmöglichkeit der Erfindung. Im Unterschied zu den Varianten nach den Fig. 1 bis 3 ist in diesem Fall das zweite Sonnenrad S02 permanent mit dem umliegenden Gehäuse 8 gekoppelt, während der Planetensteg PS, wie schon bei den Ausführungsformen nach Fig. 2 und 3, mit einer orthogonal zu einer Ausgangswelle AW" verlaufenden Eingangswelle EW" in Verbindung steht, wobei die Eingangswelle EW" in diesem Fall aber auf Seiten der Ausgangswelle AW" liegend an den Planetensteg PS herangeführt ist. Zudem können die Eingangswelle EW" und die Ausgangswelle AW" erneut über ein Lastschaltelement 15 direkt miteinander verbunden werden. Schließlich ist das Hohlrad H02 über ein Lastschaltelement 16 drehfest mit der Ausgangswelle AW" koppelbar, während das erste Sonnenrad S01 über ein Lastschaltelement 17 mit der Ausgangswelle AW" verbunden werden kann.

Wird die Standübersetzung i₀₁ größer gewählt als die Standübersetzung i₀₂, so wird sowohl bei Betätigung des Lastschaltelements 16 als auch bei Ansteuerung des Lastschaltelements 17 jeweils je ein Vorwärtsgang geschaltet, wobei im Falle der Koppelung des ersten Sonnenrades S01 mit der Ausgangswelle AW" dabei eine Drehbewegung ins Langsame auf die Ausgangswelle AW" übersetzt wird, während im Falle der Ansteuerung des Lastschaltelements 16 eine Übersetzung ins Schnelle vorliegt. In der Folge kann die Getriebeeinheit 14 in diesem Fall als Split- oder Bereichsgruppe in einem Gruppengetriebe vorgesehen werden.

Wird hingegen die Standübersetzung i₀₂ größer gewählt als die Standübersetzung i₀₁, so wird bei Betätigung des Lastschaltelements 17 ein Rückwärtsgang, sowie im Falle der Ansteuerung des Lastschaltelements 16 ein Vorwärtsgang mit Übersetzung einer Drehbewegung ins Schnelle auf die Ausgangswelle AW" geschaltet. Gemeinsam mit dem direkt realisierbaren Durchtrieb von der Eingangswelle EW" auf die Ausgangswelle AW" können somit insgesamt zwei Vorwärtsgänge, sowie ein Rückwärtsgang definiert werden. Bei geeigneter Abstimmung dieser Gänge kann die Getriebeeinheit 14 dementsprechend eine Wendegruppe und eine Split- oder Bereichsgruppe vereinigen.

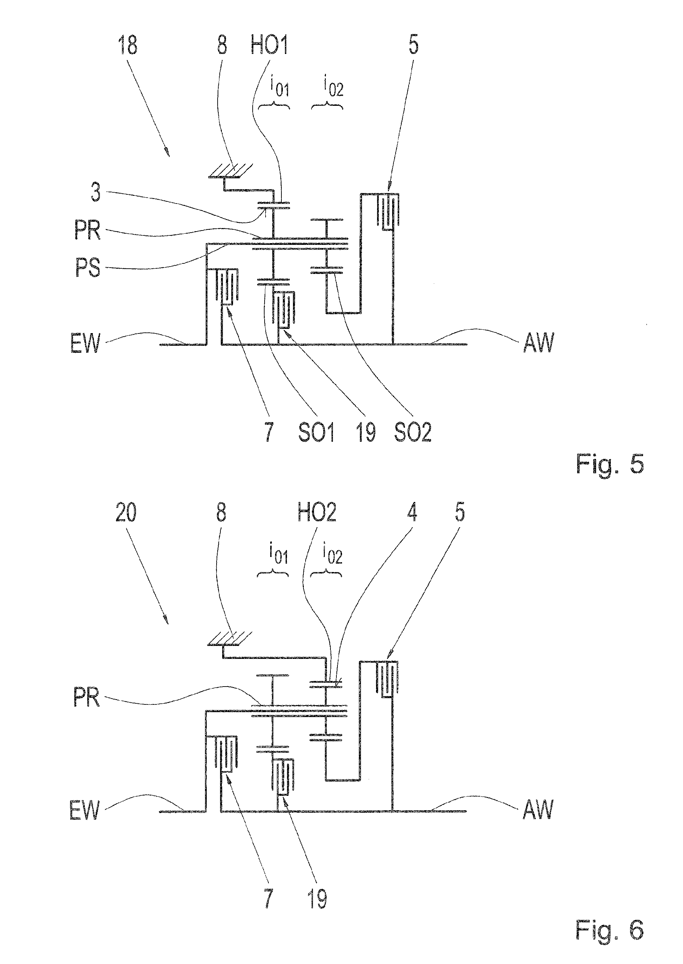

In Fig. 5 ist ferner eine fünfte Ausgestaltungsmöglichkeit einer Getriebeeinheit 18 schematisch dargestellt. Im Unterschied zu den im Vorfeld beschriebenen Varianten nach den Fig. 1 bis 4 ist in diesem Fall ein Hohlrad H01, welches über die Verzahnung 3 mit den Planetenrädern PR im Zahneingriff steht, am Gehäuse 8 festgesetzt, während der die Planetenräder PR führende Planetensteg PS drehfest mit der Eingangswelle EW verbunden ist. Ferner können sowohl das Sonnenrad S01 als auch das Sonnenrad S02 über je zugeordnete Lastschaltelemente 5 und 19 mit der Ausgangswelle AW gekoppelt werden. Die Eingangswelle EW und die Ausgangswelle AW sind zudem wiederum über das Lastschaltelement 7 direkt miteinander verbindbar.

Je nach Abstimmung der Standübersetzungen i₀₁ und i₀₂ aufeinander können auch im Falle der Variante nach Fig. 5 wiederum unterschiedliche Übersetzungsverhältnisse definiert werden. So werden für beide Verhältnisse von i₀₁ und i₀₂ zueinander bei Betätigung der Lastschaltelemente 5 und 19 jeweils Vorwärtsgänge definiert, bei welchen jeweils eine jeweilige Drehbewegung der Eingangswelle EW ins Schnelle auf die Ausgangswelle AW übersetzt wird. Allerdings ändert sich bei einem Wechsel des Verhältnisses der Standübersetzungen i₀₁ und i₀₂ zueinander die Reihenfolge dieser Vorwärtsgänge.

Da in Kombination mit der direkten Koppelbarkeit über das Lastschaltelement 7 somit insgesamt drei Vorwärtsgänge dargestellt werden können, eignet sich die Getriebeeinheit 18 in Fig. 5, je nach konkreten Übersetzungsverhältnissen der Gänge, entweder für eine Anwendung als Splitgruppe oder als Bereichsgruppe in einem Gruppengetriebe.

Schließlich geht aus Fig. 6 eine sechste Ausgestaltungsmöglichkeit der Erfindung in Form einer Getriebeeinheit 20 hervor. Diese entspricht dabei weitestgehend der Variante nach Fig. 5, wobei in diesem Fall anstatt eines Hohlrades H01 ein Hohlrad H02 vorgesehen ist, welches an der Verzahnung 4 der Planetenräder PR mit diesen im Zahneingriff steht und am Gehäuse 8 permanent festgesetzt ist. Im Übrigen entspricht die Ausgestaltung nach Fig. 6 sonst der Variante nach Fig. 5, wobei hinsichtlich der darstellbaren Gänge bei den unterschiedlichen Verhältnissen der Standübersetzung i₀₁ zu der Standübersetzung i₀₂ inverse Bedingungen vorliegen.

Mittels der einzelnen erfindungsgemäßen Ausgestaltungen einer Getriebeeinheit können unterschiedliche Übersetzungsverhältnisse zwischen einer Eingangswelle und einer Ausgangswelle auf kompakte Art und Weise realisiert werden.

### Bezugszeichen

- 1: Getriebeeinheit
- 2: Planetenstufe
- 3: Verzahnung
- 4: Verzahnung
- 5: Lastschaltelement
- 6: Lastschaltelement
- 7: Lastschaltelement
- 8: Gehäuse
- 9: Getriebeeinheit
- 10: Lastschaltelement
- 11: Lastschaltelement
- 12: Getriebeeinheit
- 13: Lastschaltelement
- 14: Getriebeeinheit
- 15: Lastschaltelement
- 16: Lastschaltelement
- 17: Lastschaltelement
- 18: Getriebeeinheit
- 19: Lastschaltelement
- 20: Getriebeeinheit
- HO1: erstes Hohlrad
- HO2: zweites Hohlrad
- PR: Planetenrad
- PS: Planetensteg
- SO1: erstes Sonnenrad
- SO2: zweites Sonnenrad
- EW: Eingangswelle
- AW: Ausgangswelle
- EW': Eingangswelle
- AW': Ausgangswelle
- EW": Eingangswelle
- AW": Ausgangswelle
- i₀₁: Standübersetzung
- i₀₂: Standübersetzung

## Patentansprüche

1. Getriebeeinheit (1, 9, 12, 14, 18, 20) für ein Gruppengetriebe, umfassend eine Planetenstufe (2), über welche eine Eingangswelle (EW, EW', EW") und eine Ausgangswelle (AW, AW', AW") unter Darstellung unterschiedlicher Übersetzungsverhältnisse miteinander koppelbar sind, wobei die Planetenstufe (2) als Komponenten mindestens ein Sonnenrad (S01, S02), mindestens ein Hohlrad (H01, H02, H01, H02), sowie an einem Planetensteg (PS) rotierbar gelagerte Planetenräder (PR) umfasst, **dadurch gekennzeichnet, dass** die Planetenräder (PR) einen Bereich mit wenigstens zwei unterschiedlichen, in Bezug auf eine Rotationsachse der Planetenstufe axial versetzt angeordneten, Verzahnungen (3, 4) aufweisen, wobei über die erste Verzahnung (3) ein Zahneingriff mit einem ersten Sonnenrad (SO1) und/oder mit einem ersten Hohlrad (HO1) hergestellt ist, wohingegen die Planetenräder (PR) an der zweiten Verzahnung (4) mit einem zweiten Sonnenrad (S02) und/oder einem zweiten Hohlrad (H02) kämmen, und dass von den Komponenten der Planetenstufe (2) eine Komponente drehfest mit der Eingangswelle (EW, EW', EW") verbunden und eine Komponente an einem Gehäuse (8) festgesetzt ist, während die verbleibenden Komponenten jeweils mit der Ausgangswelle (AW, AW', AW") koppelbar sind.

2. Getriebeeinheit (1, 9, 12, 14, 18, 20) nach Anspruch 1, **dadurch gekennzeichnet, dass** eine durch Zusammenspiel der ersten Verzahnung (3) der Planetenräder (PR) mit dem ersten Sonnenrad (SO1) und/oder dem ersten Hohlrad (HO1) definierte, erste Standübersetzung (i₀₁) kleiner oder größer ist als eine durch Zusammenspiel der zweiten Verzahnung (4) der Planetenräder (PR) mit dem zweiten Sonnenrad (S02) und/oder dem zweiten Hohlrad (H02) definierte, zweite Standübersetzung (i₀₂).

3. Getriebeeinheit (1, 9, 12, 14, 18, 20) nach Anspruch 1, **dadurch gekennzeichnet, dass** die Eingangswelle (EW, EW', EW") und die Ausgangswelle (AW, AW', AW") drehfest miteinander verbindbar sind.

4. Getriebeeinheit (1) nach Anspruch 1, **dadurch gekennzeichnet, dass** der Planetensteg (PS) am Gehäuse (8) festgesetzt und das erste Sonnenrad (SO1) mit der Eingangswelle (EW) drehfest verbunden ist, während die verbleibenden Komponenten jeweils mit der Ausgangswelle (AW) koppelbar sind.

5. Getriebeeinheit (9, 12) nach Anspruch 1, **dadurch gekennzeichnet, dass** das erste Sonnenrad (SO1) am Gehäuse (8) festgesetzt und der Planetensteg (PS) drehfest mit der Eingangswelle (EW') gekoppelt ist, wohingegen die verbleibenden Komponenten jeweils mit der Ausgangswelle (AW') drehfest verbindbar sind.

6. Getriebeeinheit (14) nach Anspruch 1, **dadurch gekennzeichnet, dass** das zweite Sonnenrad (S02) am Gehäuse (8) festgesetzt und der Planetensteg (PS) mit der Eingangswelle (EW") drehfest verbunden ist, während die verbleibenden Komponenten jeweils mit der Ausgangswelle (AW") koppelbar sind.

7. Getriebeeinheit (18) nach Anspruch 1, **dadurch gekennzeichnet, dass** das erste Hohlrad (H01) am Gehäuse (8) festgesetzt und der Planetensteg (PS) mit der Eingangswelle (EW) drehfest verbunden ist, während die verbleibenden Komponenten jeweils mit der Ausgangswelle (AW) koppelbar sind.

8. Getriebeeinheit (20) nach Anspruch 1, **dadurch gekennzeichnet, dass** das zweite Hohlrad (H02) am Gehäuse (8) festgesetzt und der Planetensteg (PS) drehfest mit der Eingangswelle (EW) gekoppelt ist, wohingegen die verbleibenden Komponenten jeweils mit der Ausgangswelle (AW) drehfest verbindbar sind.

9. Getriebeeinheit (1, 9, 12, 14, 18, 20) nach einem der vorgenannten Ansprüche, **dadurch gekennzeichnet, dass** eine Koppelung der verbleibenden Komponenten der Planetenstufe und/oder eine drehfeste Verbindung von Ein- (EW, EW', EW") und Ausgangswelle (AW, AW', AW") jeweils über Lastschaltelemente (5, 6, 7, 10, 11, 13, 15, 16, 17, 19) herstellbar ist.

10. Gruppengetriebe für ein Nutzfahrzeug, insbesondere für ein landwirtschaftliches oder kommunales Nutzfahrzeug, umfassend eine Getriebeeinheit (1, 9, 12, 14, 18, 20) nach einem oder mehreren der Ansprüche 1 bis 9.
